# EUROPÄISCHE PATENTSCHRIFT

(11) **EP 1 074 420 B1**
(45) Veröffentlichungstag und Bekanntmachung des Hinweises auf die Patenterteilung: **25.02.2004**
(21) Anmeldenummer: 00116792.3
(22) Anmeldetag: 03.08.2000
(51) Int. Cl.: B60K 26/02, G05G 1/14

(54) **Fahrpedalmodul**
Accelerator pedal module
Pédale d'accélérateur modulaire

(30) Priorität: 06.08.1999 DE 19937179
(43) Veröffentlichungstag der Anmeldung: 07.02.2001
(73) Patentinhaber: ROBERT BOSCH GMBH, 70442 Stuttgart (DE)
(72) Erfinder: Meyer, Dirk, 71364 Winnenden (DE)

(56) Entgegenhaltungen:
- EP-A- 0 748 713
- DE-C- 4 407 005

## Beschreibung

### Stand der Technik

Die Erfindung betrifft einen Fahrpedalmodul zum Einstellen der Fahrgeschwindigkeit eines Fahrzeugs der im Oberbegriff des Anspruchs 1 definierten Gattung.

Bei einem bekannten Fahrpedalmodul dieser Art (DE 44 07 005 C1) ist das tassenförmige Reibelement unter der Rückstellkraft der mindestens einen Druckfeder mit seiner Andruckfläche auf die an einem einarmigen Schwenkhebel ausgebildete Gegenfläche aufgepreßt und liegt dadurch mit seiner Reibfläche kraftschlüssig an der in der Lagerkonsole feststehend angeordneten anderen Reibfläche an. Der Schwenkhebel ist an der Lagekonsole schwenkbar gelagert und über eine Koppelstange an der Fahrpedalplatte angelenkt. Wird die Fahrpedalplatte betätigt, so wird der Schwenkhebel über die Koppelstange um seinen Lagerpunkt geschwenkt und verschiebt das tassenförmige Reibelement in Richtung dessen Tassenachse gegen die Rückstellkraft der Druckfeder. Durch die keilförmige Anordnung von Andruck- und Gegenfläche wird dabei die Reibfläche des Reibelements mit über den Verstellweg der Fahrpedalplatte zunehmender Kraft gegen die feststehende Reibfläche in der Lagerkonsole gepreßt, so daß eine definierte Kraft-Wege-Charakteristik bei der Fahrpedalbetätigung erzielt wird.

### Vorteile der Erfindung

Das erfindungsgemäße Fahrpedalmodul mit den Merkmalen des Anspruchs 1 hat den Vorteil eines konstruktiv vereinfachten Aufbaus verbunden mit großer Robustheit und ermöglicht die Einstellung einer definierten Hysterese im Kraft-Wege-Verlauf. Durch die voneinander entkoppelten Bauteile, wie Reibsegment mit Reibfläche, Reibelement mit Reib- und Andruckfläche und Federaufnahme mit Gegenfläche, können gezielte Änderungen an der Geometrie und dem Werkstoff vorgenommen und somit das sich einstellende Reibungsverhalten und der entstehende Verschleiß beeinflußt werden. Mit zunehmendem Schwenkwinkel der Fahrpedalplatte steigt die Federkraft und führt zu einer proportional ansteigenden Anpreßkraft zwischen den Reibflächen von Reibelement und Fahrpedalplatte und somit zu der gewünschten, betätigungskraftabhängigen Hystereserzeugung.

Durch die in den weiteren Ansprüchen aufgeführten Maßnahmen sind vorteilhafte Weiterbildungen und Verbesserungen des im Anspruch 1 angegebenen Fahrpedalmoduls möglich.

Gemäß einer bevorzugten Ausführungsform der Erfindung ist an dem von der Fahrpedalplatte abgekehrten freien Ende des die Reibfläche tragenden Reibsegments eine Anschlagnase ausgebildet, die bei unbelasteter Fahrpedalplatte unter der Rückstellkraft der mindestens einen Druckfeder an einem auf der von der Fahrpedalplatte abgekehrten Unterseite des Reibelements angeordneten Anschlag anliegt. Durch diese konstruktive Maßnahme dient das Reibelement gleichzeitig als mechanischer Anschlag für die Leerlaufposition der Fahrpedalplatte, so daß auf ein gesondertes Dämpfungselement verzichtet werden kann.

### Zeichnung

Die Erfindung ist anhand eines in der Zeichnung dargestellten Ausführungsbeispiels in der nachfolgenden Beschreibung näher erläutert. Es zeigen:
- Fig. 1: eine Seitenansicht eines Fahrpedalmoduls, teilweise geschnitten,
- Fig. 2: eine Draufsicht des Fahrpedalmoduls in Richtung Pfeil II in Fig. 1.

### Beschreibung des Ausführungsbeispiels

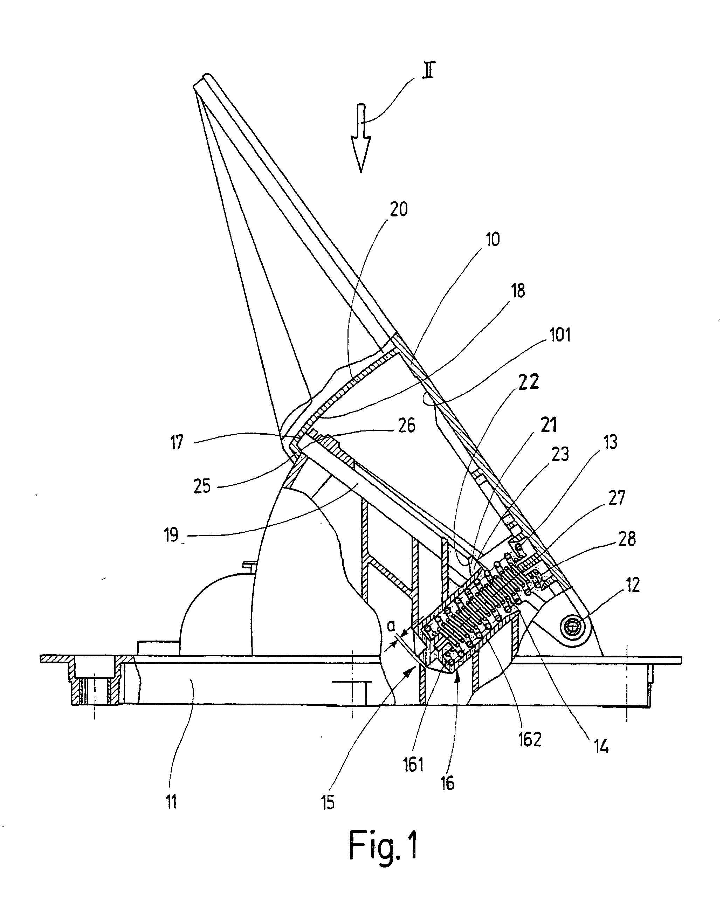

Das in Fig. 1 in Seitenansicht und teilweise geschnitten zu sehende Fahrpedalmodul dient zur Einstellung der Fahrgeschwindigkeit eines Fahrzeugs mit Antriebsmaschine durch den Fahrer. Die Antriebsmaschine ist beispielsweise ein Ottomotor, dessen Drosselklappe mit einem elektrischen Stellmotor verstellt wird. In diesem Fall dient das Fahrpedalmodul zur Erzeugung von elektrischen Signalen, die dem die Drosselklappe verstellenden Stellmotor zugeführt werden. Die Antriebsmaschine kann aber auch ein Dieselmotor oder ein Elektromotor sein, wobei auch in diesen Fällen vom Fahrpedalmodul elektrische Signale ausgehen, die entsprechend, umgeformt die Leistung der Antriebsmaschine steuern. Ein Sensor sensiert dabei die Stellung der Fahrpedalplatte und liefert ein der Stellung der Fahrpedalplatte entsprechendes Signal an eine Steuerung. Das Fahrpedalmodul ist direkt im Aktionsbereich des Fahrers eines Kraftfahrzeugs angeordnet und die Fahrpedalplatte ist das unmittelbar vom Fahrerfuß betätigte Gaspedal.

Die Fahrpedalplatte 10 ist an einer Lagerkonsole 11 um eine Schwenkachse 12 schwenkbar gehalten und mittels zweier konzentrisch angeordneter Druckfedern 13,14 an der Lagerkonsole 11 abgestützt, deren Rückstellkraft die Fahrpedalplatte 10 in die in Fig. 1 dargestellte Leerlaufposition zurückstellt. Die Druckfedern 13,14 sind einerseits in einer Federaufnahme 15 aufgenommen und andererseits an der der Federaufnahme 15 zugekehrten Unterseite 101 der Fahrpedalplatte 10 abgestützt. Die in der Lagerkonsole 11 in engen Grenzen (Hub a in Fig. 1) längsbeweglich gehaltene Federaufnahme 15 weist einen Federtopf 16 auf, dessen Topfboden 161 das Widerlager für die beiden Druckfedern 13,14 und dessen Topfmantel 162 mit seiner Innenfläche eine Führung für die äußere Druckfeder 13 bildet. Zur Abstützung der beiden Druckfedern 13,14 an der Fahrpedalplatte 10 ist an deren Unterseite 101 ein in die innere Druckfeder 14 hineinragender Führungszapfen 27 und eine dazu konzentrische Ringnut 28 vorgesehen, die die äußere Druckfeder 13 aufnimmt.

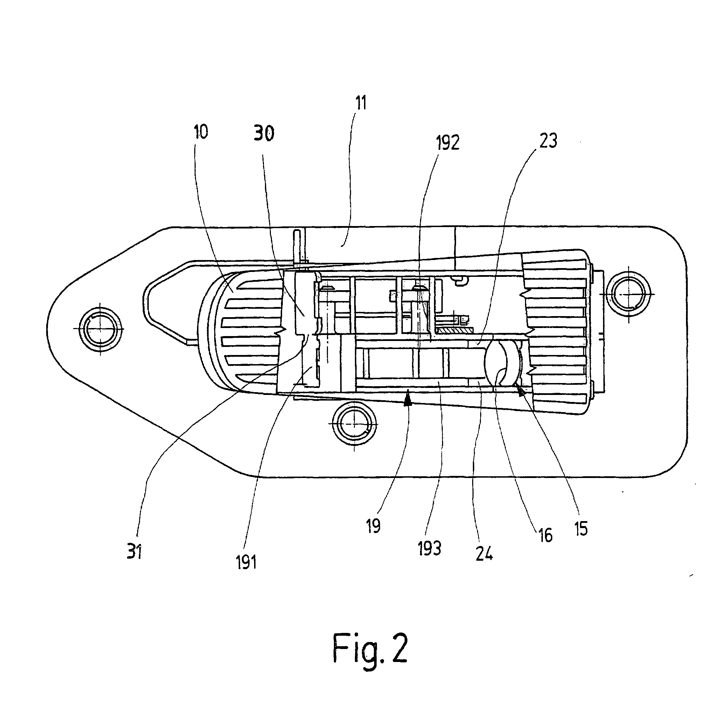

Zur Erzeugung einer Kraft-Wege-Charakteristik, bei der die zum Verstellen der Fahrpedalplatte 16 aufzubringende Verstellkraft proportional dem Verstellweg, also dem Schwenkwinkel, der Fahrpedalplatte 10 ist und dabei eine definierte Hysterese aufweist, sind zwei aufeinanderliegende, bei Betätigung der Fahrpedalplatte 10 relativ zueinander verschiebbare Reibflächen 17,18 vorgesehen, wobei die eine Reibfläche 17 mit über.den Schwenkwinkel der Fahrpedalplatte 10 zunehmender Anpreßkraft an die andere Reibfläche 18 angepreßt wird. Hierzu ist die eine Reibfläche 17 an dem einen Stirnende eines in der Lagerkonsole 11 in seiner Längsrichtung verschieblichen und quer dazu unverschieblich festgelegten Reibelements 19 angeordnet und die andere Reibfläche 18 an einem von der Unterseite 101 der Fahrpedalplatte 10 abstehenden Reibsegment 20 ausgebildet, das konzentrisch zur Schwenkachse 12 der Fahrpedalplatte 10 ausgerichtet ist. Die wegabhängige Anpressung der Reibfläche 17 des Reibelements 19 an die Reibfläche 18 des Reibsegments 20 erfolgt mittels einer am anderen Stirnende des Reibelements 19 ausgebildeten, keilförmigen Andruckfläche 21, die mit einer an der in der Lagerkonsole 11 längsbeweglich gehaltenen Federaufnahme 15 ausgebildeten Gegenfläche 22 zusammenwirkt. Wie aus Fig. 2 ersichtlich ist, ist das Reibelement 19 im Ausführungsbeispiel U-förmig ausgebildet und weist zwei durch einen Quersteg 191 miteinander verbundene Schenkel 192,193 auf, wobei die Reibfläche 17 an dem Quersteg 191 angeordnet ist und jeweils eine Andruckfläche 21 an jedem Schenkelende unter einem spitzen Winkel zur Längsachse der Schenkel 192,193 verläuft. Entsprechend sind an der Federaufnahme 15 zwei Gegenflächen 22 vorhanden, die jeweils auf den beiden Andruckflächen 21 aufliegen. Diese Gegenflächen 22 sind an zwei Flanschen 23,24 ausgebildet, die parallel zueinander verlaufen und am Topfrand etwa tangential vom Topfmantel 162 abstehen. Die Gegenflächen 22 verlaufen dabei unter einem spitzen Winkel zur Längsachse des Federtopfes 16 an der Unterseite der Flansche 23,24 und liegen eben auf den Andruckflächen 21 auf.

An dem von der Fahrpedalplatte 10 abgekehrten freien Ende des die Reibfläche 18 tragenden Reibsegments 20 ist eine Anschlagnase 25 ausgebildet, die bei nicht betätigter Fahrpedalplatte 10 unter der Rückstellkraft der beiden Druckfedern 13,14 an einem Anschlag 26 anliegt, der auf der von der Fahrpedalplatte 10 abgekehrten Unterseite des Reibelements 19 angeordnet ist. Im Ausführungsbeispiel ist der Anschlag 26 von der Unterseite des Querstegs 191 des Reibelements 19 selbst gebildet (Fig. 1).

Die Wirkungsweise des beschriebenen Fahrpedalmoduls ist wie folgt:

Wie in Fig. 1 zu sehen ist, wird die Fahrpedalplatte 10 durch die beiden Druckfedern 13,14 in der dargestellten Leerlaufstellung des Fahrpedalmoduls gehalten. Dabei werden die beiden Gegenflächen 22 an der Unterseite der Flansche 23,24 des Federtopfes 16 auf die Andruckflächen 21 an den beiden Schenkelenden des Reibelements 19 aufgedrückt und dadurch das Reibelement 19 in seiner Längsrichtung mit einer Kraftkomponente beaufschlagt, die die Reibfläche 17 am Reibelement 19 mit einer einstellbaren Anpreßkraft an die Reibfläche 18 am Reibsegment 20 andrückt. Wird die Fahrpedalplatte 10 auf ihrer Oberseite mit Fußkraft belastet, so schwenkt sie um ihre Schwenkachse 12 in Fig. 1 entgegen Uhrzeigersinn, wobei die beiden Druckfedern 13,14 zusammengedrückt werden. Die über den Topfboden 161 auf den Federtopf 16 wirkende Federkraft wächst beim Betätigen der Fahrpedalplatte 10 proportional mit dem Federweg der Druckfedern 13,14 an, wodurch auch die über die Gegenflächen 22 am Federtopf 16 auf die Andruckflächen 21 des Reibelements 19 übertragende Kraftkomponente proportional anwächst. Entsprechend proportional nimmt die auf das Reibelement 19 in dessen Längsrichtung übertragende Kraftkomponente zu, so daß sich die Anpreßkraft, mit der die Reibfläche 17 des Reibelements 19 gegen die Reibfläche 18 am Reibsegment 20 angepreßt wird, proportional mit dem Schwenkwinkel der Fahrpedalplatte 10 zunimmt. Bei Entlastung der Fahrpedalplatte 10 verringert sich die Anpreßkraft zwischen den Reibflächen 17,18 wieder, bis die Fahrpedalplatte 10 ihre in Fig. 1 dargestellte Leerlaufposition erreicht hat und die Anschlagnase 25 an dem Anschlag 26 anliegt. Durch Auslegung des Keilwinkels zwischen Andruckflächen 21 und Gegenflächen 22 sowie der Federkraft der Druckfedern 13,14 kann die auf Reibelemente 19 und Reibsegment 20 wirkende Anpreßkraft und damit die zwischen den Reibflächen 17,18 wirkende Reibkraft eingestellt werden. Die Anpreßkraft ist die Kraft, mit der die Reibfläche 17 gegen die Reibfläche 18 des Reibsegments 20 an der Fahrpedalplatte 10 gepreßt wird. Die Anpreßkraft wirkt dabei senkrecht zur Bewegungsrichtung der Reibfläche 18 bei Fahrpedalbetätigung. Proportional zur Anpreßkraft ergibt sich eine der Bewegungsrichtung der Reibfläche 18 entgegengerichtete Reibkraft, die von der Anpreßkraft und von dem zwischen den beiden Reibflächen 17,18 wirkenden, materialabhängigen Reibwert bestimmt wird.

Zum sanften Einlaufen der Fahrpedalplatte 10 in ihre in Fig. 1 dargestellte Grundstellung nach Entlasten der Fahrpedalplatte 10 erstreckt sich seitlich des Reibelements 19 in der Verlängerung des Querstegs 191 ein federelastischer Abdeckschild 30, der mit dem Quersteg 191 über eine elastische verformbare Zone 31 einstückig verbunden ist. Die Anschlagnase 25 am Reibsegment 20 der Fahrpedalplatte 10 ist so ausgebildet, daß sie zunächst auf eine Gegenfläche am Abdeckschild 30 aufläuft und diesen quer zur Längsachse des Schenkels 192 des Reibelements 19 verbiegt, wodurch eine der Schwenkbewegung der Fahrpedalplatte 10 entgegengerichtete Gegenkraft auf die Anschlagnase 25 wirkt. Diese Gegenkraft ist abhängig von dem Werkstoff des Reibelements 19 und von der Geometrie der sich elastisch verformenden Verbindungszone 31 zwischen Abdeckschild 30 und Quersteg 191. Die elastische Verformung wird so eingestellt, daß die Anschlagnase 25 nach Durchlaufen des beschriebenen Dämpfungswegs schließlich an dem Anschlag 26 an der Unterseite des Reibelements 19 bzw. dessen Quersteg 191 zur Anlage kommt.

## Patentansprüche

1. Fahrpedalmodul zum Einstellen der Fahrgeschwindigkeit eines Fahrzeugs, mit einer an einer Lagerkonsole (11) schwenkbar gehaltenen Fahrpedalplatte (10), mit mindestens einer eine Rückstellkraft auf die Fahrpedalplatte (10) ausübenden Druckfeder (13,14), mit einem Reibelement (19) zur Erzeugung einer Krafthysterese beim Betätigen der Fahrpedalplatte (10), das eine von zwei beim Schwenken der Fahrpedalplatte (10) zueinander relativ verschiebbare Reibflächen (17,18), die mit über den Schwenkweg zunehmender Anpreßkraft aneinander anpressbar sind, sowie eine der Reibfläche (17) gegenüberliegende keilförmige Andruckfläche (21) trägt, an der sich zur Erzeugung der Anpreßkraft eine keilförmige Gegenfläche (22) unter der Rückstellkraft der mindestens einen Druckfeder (13,14) abstützt, **dadurch gekennzeichnet, daß** das an seinem einen Stirnende die Reibfläche (17) und an seinem anderen Stirnende die Andruckfläche (21) tragende Reibelement (19) in seiner Längsrichtung verschieblich und quer dazu unverschieblich in der Lagerkonsole (11) gehalten ist, daß die andere Reibfläche (18) an einem von der Unterseite (101) der Fahrpedalplatte (10) abstehenden, zur Schwenkachse (12) der Fahrpedalplatte (10) konzentrischen Reibsegment (20) angeordnet ist und daß die keilförmige Gegenfläche (22) an einer in der Lagerkonsole (11) längsbeweglich gehaltenen Federaufnahme (15) für die mindestens eine Druckfeder (13,14) ausgebildet ist.

2. Fahrpedalmodul nach Anspruch 1, **dadurch gekennzeichnet, daß** die Federaufnahme (15) einen Federtopf (16) mit vom Topfboden (161) gebildeten Federwiderlager aufweist und daß die keilförmige Gegenfläche (22) auf der zum Topfboden (161) weisenden Unterseite mindestens eines vom Federtopf (16) abstehenden Flansches (23,24) unter einem spitzen Winkel zur Längsachse des Federtopfes (16) verläuft.

3. Fahrpedalmodul nach Anspruch 1 oder 2, **dadurch gekennzeichnet, daß** das Reibelement (19) U-förmig mit zwei durch einen Quersteg (191) miteinander verbundene Schenkeln (192,193) ausgebildet ist, daß die Reibfläche (17) an dem Quersteg (191) angeordnet ist und daß an jedem freien Schenkelende die Andruckfläche (21) unter einem spitzen Winkel zur Längsachse der Schenkel (192,193) verläuft.

4. Fahrpedalmodul nach Anspruch 3 wenn dieser auf Anspruch 2 rückbezogen ist, **dadurch gekennzeichnet, daß** am Federtopf (16) zwei etwa tangential vom Topfmantel (162) abstehende Flansche (23,24) vorgesehen sind, die mit je einer an ihrer Unterseite vorhandenen keilförmigen Gegenfläche (22) auf einer der diesen zugekehrten Andruckflächen (21) an den Schenkelenden aufliegen.

5. Fahrpedalmodul nach Anspruch 4, **dadurch gekennzeichnet, daß** die Flansche (23,24) am Topfrand angeordnet sind.

6. Fahrpedalmodul nach einem der Ansprüche 1 - 5, **dadurch gekennzeichnet, daß** an dem von der Fahrpedalplatte (10) abgekehrten freien Ende des die Reibfläche (18) tragenden Reibsegments (20) eine Anschlagnase (25) ausgebildet ist, die bei unbelasteter Fahrpedalplatte (10) unter der Rückstellkraft der mindestens einen Druckfeder (13,14) an einem auf der von der Fahrpedalplatte (10) abgekehrten Unterseite des Reibelements (19) angeordneten Anschlag (26) anliegt.

7. Fahrpedalmodul nach Anspruch 6 wenn dieser auf einem der Ansprüche 3 - 5 rückbezogen ist, **dadurch gekennzeichnet, daß** der Anschlag (26) von der Unterseite des Querstegs (191) gebildet ist.

8. Fahrpedalmodul nach Anspruch 2 oder 3-7 wenn mindestens die Merkmale des Anspruchs 2 vorhanden sind, **dadurch gekennzeichnet, daß** zwei Druckfedern (13,14) vorgesehen sind, die konzentrisch zueinander angeordnet sind und sich einerseits am Topfboden (161) des Federtopfes (16) und andererseits an der Unterseite (101) der Fahrpedalplatte (10) abstützen.

9. Fahrpedalmodul nach Anspruch 8, **dadurch gekennzeichnet, daß** an der Unterseite (101) der Fahrpedalplatte (10) ein in die innere Druckfeder (14) hineinragender Führungszapfen (27) und eine dazu konzentrische Ringnut (28) zur Aufnahme der äußeren Druckfeder (13) ausgebildet sind.

10. Fahrpedalmodul nach einem der Ansprüche 6 - 9 wenn mindestens die Merkmale des Anspruchs 6 enthalten sind, **dadurch gekennzeichnet, daß** am Reibelement (19) eine mit der Anschlagnase (25) am Reibsegment (20) zusammenwirkende Dämpfungsvorrichtung (30,31) zum Bremsen der Rückstellbewegung der Fahrpedalplatte (10) vor Einlaufen der Fahrpedalplatte (10) in ihre unbelastete Grundstellung angeordnet ist.

## Claims

1. Accelerator-pedal module for setting the driving speed of a vehicle, having an accelerator-pedal plate (10) which is held pivotably on a bearing bracket (11), having at least one compression spring (13, 14) which exerts a restoring force on the accelerator-pedal plate (10), and having a friction element (19) for producing a force hysteresis when actuating the accelerator-pedal plate (10), the said friction element bearing one of two friction surfaces (17, 18) which can be displaced relative to each other when the accelerator-pedal plate (10) is pivoted and can be pressed against each other with a contact-pressure force which increases over the pivoting path, and also bearing a wedge-shaped press-on surface (21) which lies opposite the friction surface (17) and on which, in order to produce the contact-pressure force, a wedge-shaped mating surface (22) is supported under the restoring force of the at least one compression spring (13, 14), **characterized in that** the friction element (19), which bears the friction surface (17) at its one end and the press-on surface (21) at its other end, is held in the bearing bracket (11) in a manner such that it can be displaced in its longitudinal direction and such that it cannot be displaced transversely thereto, **in that** the other friction surface (18) is arranged on a friction segment (20) which protrudes from the lower side (101) of the accelerator-pedal plate (10) and is concentric with the pivot axis (12) of the accelerator-pedal plate (10), and **in that** the wedge-shaped mating surface (22) is formed on a spring holder (15) which is held in a longitudinally moveable manner in the bearing bracket (11) and is used for the at least one compression spring (13, 14).

2. Accelerator-pedal module according to Claim 1, **characterized in that** the spring holder (15) has a spring cup (16) with a spring abutment formed by the cup bottom (161), and **in that** the wedge-shaped mating surface (22) runs at an acute angle with respect to the longitudinal axis of the spring cup (16) on the lower side, which faces the cup bottom (161), of at least one flange (23, 24) protruding from the spring cup (16).

3. Accelerator-pedal module according to Claim 1 or 2, **characterized in that** the friction element (19) is of U-shaped design with two limbs (192, 193) which are connected to each other by a transverse web (191), **in that** the friction surface (17) is arranged on the transverse web (191), and **in that** the press-on surface (21) runs at an acute angle with respect to the longitudinal axis of the limbs (192, 193) at each free end of the limbs.

4. Accelerator-pedal module according to Claim 3 when the latter refers back to Claim 2, **characterized in that** two flanges (23, 24) which protrude approximately tangentially from the cup casing (162) are provided on the spring cup (16) and, by means of a respective wedge-shaped mating surface (22) present on their lower side, rest on one of the press-on surfaces (21), which faces the latter, on the ends of the limbs.

5. Accelerator-pedal module according to Claim 4, **characterized in that** the flanges (23, 24) are arranged on the edge of the cup.

6. Accelerator-pedal module according to one of Claims 1-5, **characterized in that** a stop lug (25) is formed on the free end of the friction segment (20) bearing the friction surface (18), which end faces away from the accelerator-pedal plate (10), the said stop lug bearing, when the accelerator-pedal plate (10) is not leaded, under the restoring force of the at least one compression spring (13, 14) against a stop (26) arranged on the lower side of the friction element (19) facing away from the accelerator-pedal plate (10).

7. Accelerator-pedal module according to Claim 6 when the latter refers back to one of Claims 3-5, **characterized in that** the stop (26) is formed by the lower side of the transverse web (191).

8. Accelerator-pedal module according to Claim 2 or 3-7, when at least the features of Claim 2 are present, **characterized in that** two compression springs (13, 14) are provided which are arranged concentrically with each other and are supported, on the one hand, on the cup bottom (161) of the spring cup (16) and, on the other hand, on the lower side (101) of the accelerator-pedal plate (10).

9. Accelerator-pedal module according to Claim 8, **characterized in that** a guide pin (27) protruding into the inner compression spring (14) and an annular groove (28) which is concentric with the said guide pin and is used for holding the outer compression spring (13) are formed on the lower side (101) of the accelerator-pedal plate (10).

10. Accelerator-pedal module according to one of Claims 6-9, when at least the features of Claim 6 are contained, **characterized in that** a damping device (30, 31) which interacts with the stop lug (25) on the friction segment (20) and is used for braking the restoring movement of the accelerator-pedal plate (10) before the accelerator-pedal plate (10) moves into its unloaded basic position is arranged on the friction element (19).

## Revendications

1. Module de pédale d'accélérateur pour le réglage de la vitesse d'un véhicule, comportant une platine (10) de pédale d'accélérateur pivotante sur une console de palier (11), au moins un ressort de pression (13, 14) exerçant une force de rappel sur la platine (10) de pédale d'accélérateur, un élément de friction (19) qui génère une hystérésis lorsque la platine (10) de pédale d'accélérateur est actionnée, et qui supporte d'une part l'une des deux surfaces de frottement (17, 18) mobiles l'une par rapport à l'autre lors du pivotement de la platine (10) de pédale d'accélérateur, sachant que ces surfaces de frottement peuvent être serrées l'une contre l'autre avec une force qui augmente sur le trajet de pivotement, ainsi que, d'autre part, une surface de pression (21) en biseau, située en vis-à-vis de la surface de frottement (17), sur laquelle s'appuie, pour générer la force de pression, une surface antagoniste en biseau (22) sous l'action de la force de rappel d'un ressort de pression (13, 14),
**caractérisé en ce que**
la surface de frottement (17) sur l'une de ses extrémités frontales, et l'élément de friction (19) supportant la surface de pression (21) sur l'autre extrémité frontale, sont mobiles suivant un axe longitudinal et immobiles transversalement dans la console (11), l'autre surface de friction (18) est placée sur un segment de friction concentrique (20) avec l'axe de pivot (12) de la platine (10) de pédale d'accélérateur et partant de la face inférieure (101) de la platine (10) de pédale d'accélérateur, et la surface antagoniste en biseau (22) est formée sur un logement (15) prévu pour accueillir au moins un ressort de pression (13, 14), lequel logement est mobile suivant un axe longitudinal dans la console (11).

2. Module de pédale d'accélérateur selon la revendication 1,
**caractérisé en ce que**
le logement de ressort (15) présente une enveloppe de ressort (16) avec une butée formée par le fond (161) de l'enveloppe, et la surface antagoniste en biseau (22) tournée vers le fond de l'enveloppe (161) et située sur la face inférieure d'au moins une bride (23, 24) partant de l'enveloppe de ressort (16), forme un angle aigu avec l'axe longitudinal de l'enveloppe (16) du ressort.

3. Module de pédale d'accélérateur selon la revendication 1 ou 2,
**caractérisé en ce que**
l'élément de friction (19) est en forme de U et présente deux joues (192, 193) reliées ensemble par un élément transversal (191), la surface de frottement (17) est située sur l'élément transversal (191) et la surface de pression (21) sur chaque extrémité de joue libre forme un angle aigu avec l'axe longitudinal de la joue (192, 193).

4. Module de pédale d'accélérateur selon la revendication 3, lorsque celle-ci se réfère à la revendication 2,
**caractérisé en ce que**
deux brides (23, 24) partant de l'intérieur de l'enveloppe (162) suivant une orientation tangentielle sont prévues, dont les faces antagonistes (22) situées sur leur face inférieure reposent sur l'une des surfaces de pression (21) tournées vers celles-ci et situées sur les extrémités de joues.

5. Module de pédale d'accélérateur selon la revendication 4,
**caractérisé en ce que**
la bride (23, 24) est disposée sur la bordure de l'enveloppe.

6. Module de pédale d'accélérateur selon l'une des revendications 1 à 5,
**caractérisé en ce que**
l'extrémité libre du segment de friction (20) portant la surface de frottement (18) et opposée à la platine (10) de pédale d'accélérateur, forme une came de butée (25) qui, lorsque la platine (10) de pédale d'accélérateur n'est pas sollicitée, est appliquée contre une butée (26) disposée sur la face inférieure de l'élément de friction (19) opposée à la platine (10) de pédale d'accélérateur, sous l'action de la force de rappel d'au moins un ressort de pression (13, 14).

7. Module de pédale d'accélérateur selon la revendication 6, lorsque celle-ci se réfère à l'une des revendications 3 à 5,
**caractérisé en ce que**
la butée (26) est formée par la face inférieure de l'élément transversal (191).

8. Module de pédale d'accélérateur selon la revendication 2 ou 3 à 7 lorsque les propriétés de la revendication 2 au moins sont disponibles,
**caractérisé en ce que**
deux ressorts de pression (13, 14) sont prévus, ceux-ci étant disposés de manière concentrique et s'appuyant sur le fond (161) de l'enveloppe (16) de ressort d'une part et sur la face inférieure (101) de la platine (10) de pédale d'accélérateur d'autre part.

9. Module de pédale d'accélérateur selon la revendication 8,
**caractérisé par**
un axe de guidage (27) pénétrant à l'intérieur du ressort de pression (14) sur la face inférieure (101) de la platine (10) de pédale d'accélérateur et une rainure circulaire concentrique (28) pour recevoir le ressort externe (13).

10. Module de pédale d'accélérateur selon l'une des revendications 6 à 9, lorsque les propriétés de la revendication 6 au moins sont disponibles,
**caractérisé en ce que**
sur l'élément de friction (19), un dispositif d'amortissement (30, 31) agissant en interaction avec la came de butée (25) sur le segment de friction (20) est prévu pour freiner le déplacement de rappel de la platine (10) de pédale d'accélération avant que la platine (10) de pédale d'accélérateur n'arrive dans sa position initiale de repos.
